# EUROPÄISCHE PATENTSCHRIFT

(11) **EP 4 480 294 B1**
(45) Veröffentlichungstag und Bekanntmachung des Hinweises auf die Patenterteilung: **18.03.2026**
(21) Anmeldenummer: 24168689.8
(22) Anmeldetag: 05.04.2024
(51) Int. Cl.: A01B 76/00, A01B 67/00, A01B 69/00, A01B 71/02

(54) **FAHRERASSISTENZSYSTEM ZUR ANSTEUERUNG EINES LANDWIRTSCHAFTLICHEN GESPANNS**
DRIVER ASSISTANCE SYSTEM FOR CONTROLLING AN AGRICULTURAL VEHICLE AND IMPLEMENT COMBINATION
SYSTÈME D'ASSISTANCE AU CONDUCTEUR POUR LA COMMANDE D'UN ATTELAGE AGRICOLE

(30) Priorität: 19.06.2023 DE 102023115904
(43) Veröffentlichungstag der Anmeldung: 25.12.2024
(73) Patentinhaber: CLAAS Saulgau GmbH, 88340 Bad Saulgau (DE)
(72) Erfinder: Birkmann, Christian, 33775 Versmold (DE); Rupp, Magnus, 73494 Rosenberg (DE); Bistritz, Philipp, 78224 Singen (DE)
(74) Vertreter: Budach, Steffen

(56) Entgegenhaltungen:
- DE-A1- 102017 220 539
- DE-A1- 102018 123 478
- DE-A1- 102020 112 297
- US-A1- 2021 046 917

## Beschreibung

Die vorliegende Erfindung betrifft ein Fahrerassistenzsystem zur Ansteuerung eines landwirtschaftlichen Gespanns gemäß dem Oberbegriff des Anspruches 1. Weiterhin sind ein landwirtschaftliches Gespann gemäß Anspruch 14 sowie ein Verfahren zum Betrieb des landwirtschaftlichen Gespanns nach dem Oberbegriff des Anspruchs 15 Gegenstand der vorliegenden Erfindung.

Ein Fahrerassistenzsystem zur Ansteuerung eines landwirtschaftlichen Gespanns, bestehend aus einer landwirtschaftlichen Arbeitsmaschine und einem daran angeordneten Anbaugerät, mit den Merkmalen des Oberbegriffs des Anspruches 1 ist aus der DE 10 2018 123 478 A1 bekannt. Dort ist ein Fahrerassistenzsystem mit einer Erfassungseinrichtung zur Erfassung von Betriebsparametern und eine Regeleinrichtung zur Regelung von Arbeitsprozessen der Arbeitsmaschine und des Anbaugerätes beschrieben. Von der Erfassungseinrichtung während der Durchführung eines Arbeitsauftrages erfasste Betriebsparameter werden an die Regeleinrichtung übermittelt, welche eine prädiktive Regelung mindestens eines Arbeitsprozesses der landwirtschaftlichen Arbeitsmaschine, d.h. die Einstellung von Maschineneinstellung von Arbeitsmaschine und Anbaugerät, auf Basis von Informationen durchführt, die ein Online-Lern-Algorithmus basierend auf den erfassten Betriebsparametern erzeugt. Den erfassten Betriebsparametern von einem Ortungssystem generierte Geodaten zuzuordnen, um georeferenzierte Parameterdaten zu erzeugen, wobei die georeferenzierten Parameterdaten von dem Online-Lern-Algorithmus online angewendet werden, um die Informationen für die prädiktive Regelung zu erzeugen. Das gattungsgemäße Fahrerassistenzsystem ist dahingehend ausgelegt, die Einstellung der Betriebsparameter während der Durchführung eines Arbeitsauftrages auf einem Feld anzupassen, um die Arbeitsweise des Gespanns zu optimieren. Hiervon unberührt ist dabei die Einstellung der Betriebsparameter des Gespanns zu Beginn der Durchführung des Arbeitsauftrages. Diese Einstellung obliegt der Bedienperson, welche das Gespann bedient. Insbesondere bei Lohnunternehmen wechselt die Bedienperson, welche ein bestimmtes Feld oder eine bestimmte Fläche im Zuge der Durchführung eines Arbeitsauftrages während einer Erntesaison oder im Folgejahr bearbeitet. Damit einhergehend variieren die vorgenommenen Maschineneinstellungen zu Beginn der Durchführung des Arbeitsauftrages in Abhängigkeit von der Bedienperson. Die Anpassung der Maschinenparameter innerhalb des Feldes je nach Feldbeschaffenheit durchzuführen, wie es aus der DE 10 2018 123 478 A1 bekannt ist, ist zeitaufwendig, da zumindest eine Fahrspur abgefahren wird, um die für die prädiktive Regelung erforderlichen Informationen zu ermitteln, und stellt zudem hohe Anforderungen an die Rechenleistung des Fahrerassistenzsystems. Ebenso variieren im Allgemeinen die individuellen Fahrerprofile, welche die jeweilige Bedienperson vor sowie während der Durchführung des Arbeitsauftrages auf dem Feld oder der Fläche einstellt.

Ausgehend vom vorstehend genannten Stand der Technik liegt der Erfindung die Aufgabe zugrunde, ein Fahrerassistenzsystem der eingangs genannten Art weiterzubilden, welches die Nachteile des Standes der Technik vermeidet.

Diese Aufgabe wird erfindungsgemäß durch ein Fahrerassistenzsystem mit den Merkmalen des Anspruches 1 gelöst. Vorteilhafte Weiterbildungen sind Gegenstand der hiervon abhängigen Ansprüche.

Gemäß dem Anspruch 1 wird ein Fahrerassistenzsystem zur Ansteuerung eines landwirtschaftlichen Gespanns vorgeschlagen, wobei das Gespann einen Traktor und ein landwirtschaftliches Anbaugerät aufweist, wobei das Fahrerassistenzsystem durch ein Kommunikationsmittel mit zumindest einer Datenbank verbunden ist, in welcher Maschineneinstellungen zumindest einer Kombination aus Traktor und Anbaugerät hinterlegt sind. Erfindungsgemäß wird vorgeschlagen, dass das Fahrerassistenzsystem dazu ausgeführt und eingerichtet ist, ein erstmaliges Befahren eines Feldes oder einer Fläche zum Bearbeiten durch das Gespann durch das Überschreiten einer geolokalisierten Begrenzung des Feldes oder der Fläche zu detektieren, einen Datensatz eines dem Feld oder der Fläche zugeordneten Fahrerprofils und/oder einer zugeordneten Maschineneinstellung des Gespanns beim erstmaligen Befahren des Feldes oder der Fläche aus der zumindest einen Datenbank zu laden und den Traktor und/oder das Anbaugerät gemäß dem geladenen Fahrerprofil und/oder der geladenen Maschineneinstellung einzustellen.

Wesentlich ist die Überlegung, dass das erstmalige Befahren des Feldes oder der Fläche zur Bearbeitung durch das Gespann durch das Detektieren der geolokalisierten Begrenzung des Feldes oder der Fläche das automatische Laden eines Datensatzes eines dem Feld oder der Fläche zugeordneten Fahrerprofils und/oder einer zugeordneten Maschineneinstellung auslöst. Mit dem feld- oder flächenspezifisch geladenen Datensatz des Fahrerprofils und/oder der feld- oder flächenspezifisch geladenen Maschineneinstellung wird die Bearbeitung durch das Gespann durchgeführt. Dies reduziert die Einstellzeit der Maschineneinstellung des Gespanns. Zudem ist die Bedienperson davon entlastet, selbst eine Maschineneinstellung des Gespanns vorzugeben. Das feld- oder flächenspezifische Laden des Fahrerprofils ist insbesondere dann von Vorteil, wenn unterschiedliche Bedienpersonen zumindest den Traktor zur Durchführung von landwirtschaftlichen Arbeitsprozessen verwenden.

Erstmaliges Befahren eines Feldes oder einer Fläche durch das Gespann bedeutet in diesem Zusammenhang, dass das Feld oder die Fläche zur Durchführung eines aktuell auszuführenden Arbeitsauftrages durch das landwirtschaftliche Gespann beim Erreichen des Feldes oder der Fläche erstmalig befahren wird. Das jeweilige Feld bzw. die jeweilige Fläche sind kartografisch erfasst. Die kartografischen Daten stehen hierbei dem Fahrerassistenzsystem zur Verfügung oder können diesem zur Verfügung gestellt werden. Das erstmalige Passieren eines Zufahrtpunktes des Feldes oder der Fläche durch das Gespann in einer bestehenden Kombination aus Traktor und Anbaugerät zur Durchführung eines aktuell auszuführenden Arbeitsauftrages wird als erstmaliges Befahren erkannt. Dies umfasst auch das Befahren desselben Feldes oder derselben Fläche durch ein Gespann, dessen Zusammenstellung sich während eines Arbeitstages geändert hat, um einen neuen, einen abweichenden Arbeitsauftrag oder denselben Arbeitsauftrag auf dem Feld oder Fläche auszuführen. Die untertägige Änderung des Arbeitsauftrages und/oder die Änderung der Zusammensetzung des Gespanns und das anschließende erneute Befahren desselben Feldes oder derselben Fläche stellen ein erstmaliges Befahren des Feldes oder der Fläche dar.

Insbesondere kann das Fahrerassistenzsystem dazu ausgeführt und eingerichtet sein, das Verlassen des Feldes oder der Fläche durch das Überschreiten der geolokalisierten Begrenzung zu detektieren und in Abhängigkeit hiervon zumindest eine vom Fahrerassistenzsystem auszulösende Aktion zu initiieren. Beispielsweise kann eine automatisierte Abrechnung der auf dem Feld oder der Fläche von dem Gespann durchgeführten Arbeiten als Aktion initiiert werden.

Dabei kann die zumindest eine auszulösende Aktion das Abspeichern von während der Bearbeitung des Feldes oder der Fläche ausgeführten Änderungen der Maschineneinstellungen von Traktor und/oder Anbaugerät und/oder des Fahrerprofils in der Datenbank umfassen.

Bevorzugt kann das Fahrerassistenzsystem die Zusammenstellung des Gespanns selbsttätig aus von einem entfernten Datenverarbeitungssystem übermittelten Arbeitsauftrag ableiten und/oder durch eine manuelle Auftragseingabe mittels einer Benutzerschnittstelle des Fahrerassistenzsystems bestimmen oder ergänzen. Der Arbeitsauftrag kann Angaben zur durchzuführenden Tätigkeit auf dem Feld oder der Fläche, zur Bedienperson, zum Feld oder der Fläche, wie Bezeichnung oder Schlagnummer, zur angebauten Fruchtart, zur Kombination aus Traktor, Anbaugerät und Bereifung des Traktors, zur Streckenplanung, zu Boden- und Arbeitsbedingungen und/oder zu Anwendungsdaten enthalten.

Gemäß einer Weiterbildung kann das Fahrerassistenzsystem dazu ausgeführt und eingerichtet sein, mittels zumindest eines Bussystems mit Steuereinheiten des Traktors und des Anbaugerätes unabhängig voneinander bidirektional zu kommunizieren. Hierdurch lassen sich Maschineneinstellungen des Traktors und des Anbaugerätes unabhängig voneinander zwischen diesen und dem Fahrerassistenzsystem austauschen.

Weiter bevorzugt kann das Fahrerassistenzsystem zur manuellen Auswahl von nach dem Überschreiten der geolokalisierten Begrenzung des Feldes oder der Fläche vorgeschlagenen Maschineneinstellungen und/oder Fahrerprofilen für das Gespann durch eine Bedienperson ausgeführt und eingerichtet sein.

Insbesondere kann das Fahrerassistenzsystem zur automatischen, insbesondere interaktiven, Generierung von Handlungsempfehlungen zur Maschineneinstellung nach dem Überschreiten der geolokalisierten Begrenzung des Feldes oder der Fläche ausgeführt und eingerichtet sein. Hierdurch kann die Situation berücksichtigt werden, dass für den Traktor und das Anbaugerät in ihrer Kombination als Gespann, mit der das Feld oder die Fläche bearbeitet werden sollen, kein gemeinsamer feldspezifischer Datensatz verfügbar ist. Beispielsweise können für den Traktor und das Anbaugerät jeweils spezifische Maschineneinstellungen aus der Datenbank geladen werden, die für das Feld oder die Fläche zu einem vorangehenden Zeitpunkt einer Bearbeitung durch den Traktor oder das Anbaugerät hinterlegt worden sind. Analog kann dies für das zu ladende Fahrerprofil gelten.

Gemäß einer Weiterbildung kann das Fahrerassistenzsystem dazu ausgeführt und eingerichtet sein, während der Bearbeitung des Feldes oder der Fläche Bodendaten, Erntedaten, Maschinendaten, Anbaugerätedaten, Reifendaten und/oder Änderungen des Fahrerprofils georeferenziert aufzuzeichnen. Hierdurch kann eine bestehende Datenbasis der zumindest einen Datenbank erweitert werden. Zudem ermöglicht das georeferenzierte Aufzeichnen die Dokumentation des Bearbeitungsprozesses hinsichtlich Nachverfolgbarkeit und ermöglicht nachgelagert eine Analyse zur Effizienzsteigerung für zukünftige Einsätze des Gespanns.

Dazu kann das Fahrerassistenzsystem dazu eingerichtet sein, die aufgezeichneten Bodendaten, Erntedaten, Maschinendaten, Anbaugerätedaten, Reifendaten und/oder Änderungen des Fahrerprofils an das entfernte Datenverarbeitungssystem zur Auswertung und/oder Hinterlegung zu übertragen. Auf diese Weise kann eine fortlaufende Aktualisierung der Datensätze erreicht werden. Darüber hinaus bietet die die Möglichkeit der feldspezifischen Dokumentation der Abarbeitung von Arbeitsaufträgen, beispielsweise für spätere Auswertungen der Arbeitsabläufe oder Abrechnungen.

Insbesondere kann das Fahrerassistenzsystem dazu ausgeführt und eingerichtet sein, bei einem erstmaligen Detektieren des Befahrens des Feldes oder der Fläche zum Bearbeiten durch ein Gespann, dessen Kombination aus Traktor und Anbaugerät in der zumindest einen Datenbank keine entsprechende, insbesondere feldspezifische, Hinterlegung von Maschineneinstellungen aufweist, mittels in der zumindest einen Datenbank und/oder in Steuereinheiten des Traktors und des Anbaugerätes hinterlegten initialen Maschineneinstellungen einzustellen, die für in der zumindest einen Datenbank hinterlegte historische Erntedaten und/oder Bodendaten des zu bearbeitenden Feldes oder der Fläche spezifisch sind.

Gemäß einer bevorzugten Ausführung kann das Fahrerassistenzsystem Positionsdaten von zumindest einem dem Gespann zugeordneten Positionssensor empfangen, wobei der zumindest eine Positionssensor am Traktor und/oder am Anbaugerät angeordnet und/oder ein von einer Bedienperson des Gespanns mitgeführter Positionssensor sein kann.

Bevorzugt kann das Laden des dem Feld oder der Fläche zugeordneten Fahrerprofils und/oder der zugeordneten Maschineneinstellung beim erstmaligen Befahren des Feldes oder der Fläche aus der zumindest einen Datenbank durch zeitabhängigen Abgleich des Abrufzeitpunktes mit dem Zeitpunkt der Hinterlegung des dem detektierten Feld oder der Fläche zugeordneten Fahrerprofils und/oder der zugeordneten Maschineneinstellung des Gespanns erfolgen. Auf diese Weise lassen sich eine Maschineneinstellung und/oder ein Fahrerprofil laden, welche neben der räumlichen Abhängigkeit eine zeitliche, insbesondere jahreszeitliche Abhängigkeit aufweisen.

Insbesondere kann die zumindest eine Datenbank in einer gespannfernen Datenquelle hinterlegt sein, wobei die gespannferne Datenquelle eine gespannferne Datenverarbeitungshardware, insbesondere ein cloudbasiertes Datenverarbeitungssystem, ist. Grundsätzlich kann es sich bei der gespannfernen Datenquelle aber auch um einen von dem Gespann entfernten Datenserver handeln, der über eine Internetverbindung oder dergleichen mit dem Gespann kommuniziert.

Nach einer weiteren Lehre gemäß Anspruch 14, der eigenständige Bedeutung zukommt, wird ein Gespann, welches einen Traktor und ein landwirtschaftliches Anbaugerät aufweist, wobei dem Gespann ein Fahrerassistenzsystem zugeordnet ist, beansprucht. Wesentlich nach dieser weiteren Lehre ist die Ausstattung des Gespanns mit einem Fahrerassistenzsystem gemäß der erstgenannten Lehre. Auf alle Ausführungen zu der erstgenannten Lehre, die geeignet sind, das landwirtschaftliche Gespann insgesamt zu erläutern, darf verwiesen werden.

Nach einer weiteren Lehre gemäß Anspruch 15, der eigenständige Bedeutung zukommt, wird ein Verfahren zum Betrieb eines Gespanns, welches einen Traktor und ein landwirtschaftliches Anbaugerät aufweist, wobei das Gespann von einem diesem zugeordneten Fahrerassistenzsystem, insbesondere einem vorschlagsgemäßen Fahrerassistenzsystem, angesteuert wird, beansprucht, wobei das Fahrerassistenzsystem durch ein Kommunikationsmittel mit zumindest einer Datenbank verbunden ist, in welcher Maschineneinstellungen zumindest einer Kombination aus Traktor und Anbaugerät hinterlegt sind, wobei das Fahrerassistenzsystem ein erstmaliges Befahren eines Feldes oder einer Fläche zum Bearbeiten durch das Gespann durch das Überschreiten einer geolokalisierten Begrenzung des Feldes oder der Fläche detektiert wird, ein dem Feld oder der Fläche zugeordnetes Fahrerprofil und/oder eine zugeordnete Maschineneinstellung beim erstmaligen Befahren des Feldes oder der Fläche aus der zumindest einen Datenbank lädt und den Traktor und/oder das Anbaugerät gemäß dem geladenen Fahrerprofil und/oder der geladenen Maschineneinstellung einstellt.

Die vorliegende Erfindung wird nachstehend anhand eines in den Zeichnungen dargestellten Ausführungsbeispieles näher erläutert.

Es zeigen:
- Fig. 1: schematisch und exemplarisch ein landwirtschaftliches Gespann; und
- Fig. 2: exemplarisch ein vereinfachtes Ablaufdiagramm.

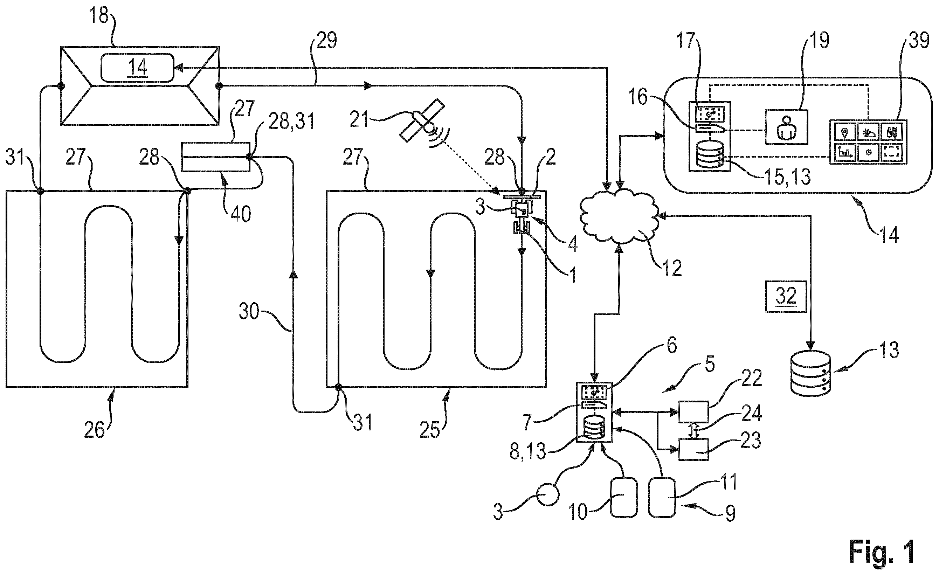

Fig. 1 zeigt schematisch und exemplarisch ein landwirtschaftliches Gespann 4, umfassend einen Traktor 1 mit einer Feldspritze als Anbaugerät 2. Der Traktor 1 lässt sich über mindestens eine Geräteschnittstelle mit mindestens einem Anbaugerät 2 bestücken. Bei dem Anbaugerät 2 kann es sich um jedwedes Anbaugerät handeln, das in obiger Weise über die Geräteschnittstelle mit dem Traktor 1 koppelbar ist. Beispielsweise kann es sich bei dem landwirtschaftlichen Anbaugerät 2 um die in der Zeichnung dargestellte Feldspritze, einen Pflug, eine Ballenpresse, eine Sämaschine oder dergleichen handeln. Der Traktor 1 und/oder das Anbaugerät 2 weisen zumindest einen Positionssensor 3 zum Empfang von Positionsdaten auf, die von einem Positionsbestimmungssystem 21 bereitgestellt werden.

Das landwirtschaftliche Gespann 4 ist mit einem Fahrerassistenzsystem 5 ausgestattet, welches zur Ansteuerung des landwirtschaftlichen Gespanns 4 ausgeführt und eingerichtet ist. Das Fahrerassistenzsystem 5 weist eine Benutzerschnittstelle 6 zur Eingabe und Ausgabe von Informationen, eine Recheneinheit 7, eine Speichereinheit 8 sowie eine Sensoranordnung 9 auf. Die Sensoranordnung 9 ist, neben dem Positionssensor 3, mit mindestens einem Sensor 10, 11, hier und vorzugsweise mit mehreren Sensoren 10, 11 zur Aufnahme von Messwerten ausgestattet. Dabei sind die Sensoren 10 der Arbeitsmaschine 2 und die Sensoren 11 dem Anbaugerät 3 zugeordnet.

Das Fahrerassistenzsystem 5 ist durch ein Kommunikationsmittel 12 mit zumindest einer Datenbank 13 verbunden. Bei dem Kommunikationsmittel 12 kann es sich um ein Netzwerk handeln, welches lokal im Gespann 4 implementiert ist, ein Mobilfunknetz oder ein W-LAN. Die zumindest eine Datenbank 13 kann in der Speichereinheit 8 des Fahrerassistenzsystems 5 hinterlegt sein.

Alternativ oder zusätzlich kann die zumindest eine Datenbank 13 in einer gespannfernen Datenquelle hinterlegt sein. Hierbei kann die zumindest eine Datenbank 13 in einer Speichereinheit 15 als Datenquelle eines Datenverarbeitungssystems 14 hinterlegt sein. Das Datenverarbeitungssystem 14 umfasst eine Recheneinheit 16 sowie eine Benutzerschnittstelle 17.

Das Datenverarbeitungssystem 14 kann als ein Farmmanagementsystem ausgeführt sein, welches sich auf einer geeigneten Datenverarbeitungshardware in einer Hofstätte 18 befindet. Alternativ kann das entfernte Datenverarbeitungssystem 14 ein cloudbasiertes Datenverarbeitungssystem sein, welches sich in einem entfernten Rechenzentrum befindet.

In der zumindest einen Datenbank 13 sind Datensätze 39 mit Maschineneinstellungen 20 zumindest einer Kombination aus Traktor 1 und Anbaugerät 2 hinterlegt. Weiterhin ist zumindest ein Fahrerprofil 19 einer Bedienperson des Gespanns 4 in der zumindest einen Datenbank 13 als Datensatz 39 hinterlegt.

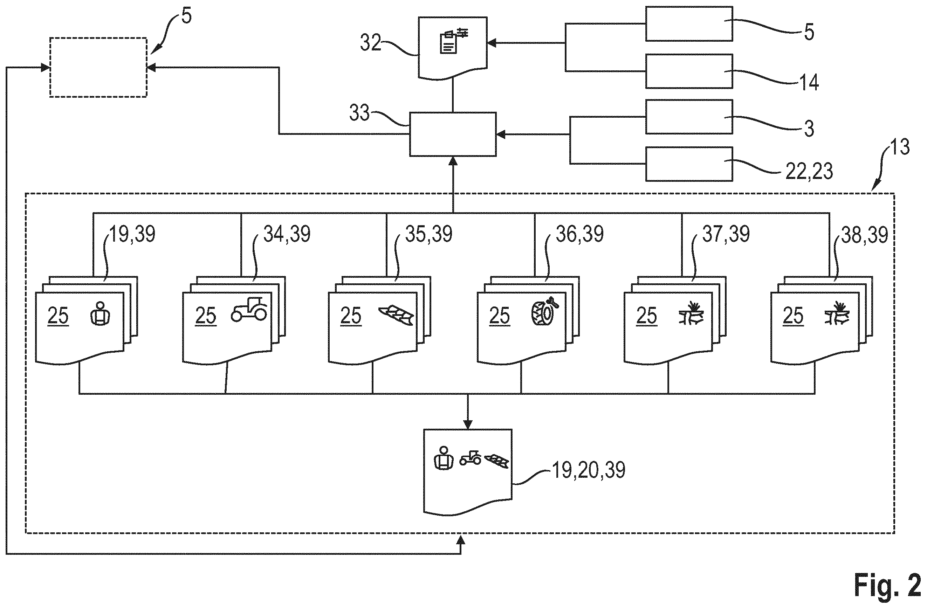

Das Fahrerassistenzsystem 5 verwendet zu seiner Bedienung ein Fahrerprofil 19 und zur Ansteuerung des Gespanns 4 eine Maschineneinstellung 20 des Gespanns 4, die jeweils aus der zumindest einen Datenbank 13 geladen werden. Von dem Fahrerprofil 19 sowie der Maschineneinstellung 20 des Gespanns 4 umfasste Daten werden weiter unten unter Bezugnahme auf Fig. 2 erläutert.

Der Traktor 1 und das Anbaugerät 2 können mittels eines Bussystems 24 Informationen untereinander austauschen. Das Fahrerassistenzsystem 5 ist dazu ausgeführt und eingerichtet, mittels zumindest eines Bussystems, vorzugsweise des Bussystems 24, mit zumindest einer Steuereinheit 22 des Traktors 1 und zumindest einer Steuereinheit 23 des Anbaugerätes 2 voneinander unabhängig bidirektional zu kommunizieren.

Wie weiter aus Fig. 1 ersichtlich ist, bewegt sich das Gespann 4 entlang einer Fahrstrecke 29 zu einem Feld 25, um dieses zu bearbeiten. Nach der Bearbeitung des Feldes 25 kann das Gespann 5 entlang einer weiteren Fahrstrecke 30 zu einem weiteren Feld 26 bzw. einer weiteren Fläche 40 fahren, um auch diese zu bearbeiten. Die Fahrstrecken 29, 30 können öffentliche Straßen und Wege und/oder die Felder 25, 26 untereinander verbindende Feldwege oder dergleichen sein.

Das jeweilige Feld 25, 26 bzw. die jeweilige Fläche 40 sind kartografisch erfasst. Die kartografischen Daten stehen hierbei dem Fahrerassistenzsystem 5 zur Verfügung oder können diesem zur Verfügung gestellt werden. Die Felder 25, 26 bzw. Flächen 40 sind geschlossen ausgeführt und weisen geolokalisierte Begrenzungen 27 als administrative Grenzen auf. Die geolokalisierten Begrenzungen 27 der Felder 25, 26 sind hier vereinfacht als Rechtecke dargestellt, sie können jedoch hiervon abweichende Formen aufweisen. Die geolokalisierten Begrenzungen 27 ermöglichen es, zwischen einem Standort des Gespanns 4 innerhalb und außerhalb der geolokalisierten Begrenzungen 27 respektive der Felder 25, 26 zu unterscheiden.

Das Fahrerassistenzsystem 5 ist dazu ausgeführt und eingerichtet ist, ein erstmaliges Befahren eines der Felder 25, 26 zum Bearbeiten durch das Gespann 4 durch das Überschreiten der geolokalisierten Begrenzung 27 des Feldes 25, 26 zu detektieren. Das Überschreiten der geolokalisierten Begrenzung 27, um das Feld 25 oder das Feld 26 erstmalig zu befahren, wird durch das Passieren eines Zufahrtpunktes 28 detektiert. Hierzu kann das Gespann 4 in regelmäßigen Abständen seine Position senden oder die Abfrage seiner Position von außen ermöglichen. Diese Ortsbestimmung kann beispielsweise durch das als Mobilfunksystem auf Funkzellenebene oder koordinatenbezogen durch das als Navigationssatellitensystem ausgeführte Positionsbestimmungssystem 21 erfolgen.

Das erstmalige Befahren eines der Felder 25, 26 durch das Gespann 4 bedeutet in diesem Zusammenhang, dass das Feld 25, 26 zur Durchführung eines aktuell auszuführenden Arbeitsauftrages 32 durch das landwirtschaftliche Gespann 4 beim Erreichen des Feldes 25, 26 oder der Fläche 40 erstmalig befahren wird; das erstmalige Passieren des Zufahrtpunktes 28 durch das Gespann 4 in einer bestehenden Kombination wird detektiert. Dies umfasst auch das Befahren desselben Feldes 25, 26 oder derselben Fläche 40 durch ein Gespann, dessen Zusammenstellung sich während eines Arbeitstages geändert hat, um einen neuen, einen abweichenden Arbeitsauftrag 32 oder denselben Arbeitsauftrag 32 auf dem Feld 25, 26 auszuführen. Die untertägige Änderung des Arbeitsauftrages 32 und/oder die Änderung der Zusammensetzung des Gespanns 4 und damit verbunden das wiederholte Passieren des Zufahrtpunktes 28 stellen ebenso ein erstmaliges Befahren des Feldes 25, 26 dar.

Das Detektieren des erstmaligen Befahrens beispielsweise des Feldes 25 führt dazu, dass das Fahrerassistenzsystem 5 einen Datensatz 39 eines dem Feld 25 zugeordneten Fahrerprofils 19 und/oder einer dem Feld 25 zugeordneten Maschineneinstellung 20 des Gespanns 4 beim erstmaligen Befahren des Feldes 25 aus der zumindest einen Datenbank 13 lädt und den Traktor 1 und/oder das Anbaugerät 2 gemäß dem geladenen Fahrerprofil 19 und/oder der geladenen Maschineneinstellung 20 einstellt.

In Fig. 2 ist exemplarisch ein vereinfachtes Ablaufdiagramm dargestellt, anhand dessen das Verfahren zum Betrieb des Gespanns 4 erläutert wird, wenn es zur Detektion des erstmaligen Befahrens des Feldes 25 und/oder des Feldes 26 kommt.

Der Arbeitsauftrag 32 für das Gespann 4 zur Bearbeitung des Feldes 25 und/oder des Feldes 26 kann vom als Farmmanagementsystem ausgeführten Datenverarbeitungssystem 14 empfangen werden. Eine manuelle Bearbeitung des empfangenen Arbeitsauftrages 32 kann erforderlichenfalls mittels des Fahrerassistenzsystems 5 von der Bedienperson des Gespanns durchgeführt werden. Dies kann vorzugsweise durch einen vom Fahrerassistenzsystem 5 gesteuerten interaktiven Dialog geschehen.

Der Arbeitsauftrag 32 kann grundsätzliche Informationen zur durchzuführenden Aufgabe, zur Bedienperson, zum Auftraggeber, zum Feld 25, 26 und/oder zur Fruchtart enthalten. Weiterhin kann der Arbeitsauftrag 32 Informationen zum Gespann 4, d.h. dessen Zusammensetzung aus Traktor 1 und Anbaugerät 2, zur Streckenplanung, zu Bodenbedingungen, Umgebungsbedingungen und/oder Anwendungsdaten enthalten. Der im Allgemeinen vom Datenverarbeitungssystem 14 generierte Arbeitsauftrag 32 kann von der Bedienperson des Gespanns 4 mittels des Fahrerassistenzsystems 5 ergänzt werden. Ein bestehender Arbeitsauftrag 32 kann vom Datenverarbeitungssystem 14 fortlaufend aktualisiert werden, um etwaige Änderungen, beispielsweise der Streckenplanung oder von Umgebungsbedingungen, bei der Durchführung des Arbeitsauftrages 32 berücksichtigen zu können.

Im Prozessschritt 33 wird das Erreichen des Zufahrtpunktes 28 zur erstmaligen Bearbeitung des Feldes 25 im Rahmen des vorgegebenen Arbeitsauftrages 32 detektiert. Die hierfür erforderlichen Lokalisierungsdaten werden vom Positionssensor 3 empfangen.

Im Prozessschritt 33 kann die Zusammenstellung des Gespanns 4 selbsttätig aus dem von dem entfernten Datenverarbeitungssystem 14 übermittelten Arbeitsauftrag 32 abgeleitet und/oder durch eine manuelle Auftragseingabe mittels einer Benutzerschnittstelle des Fahrerassistenzsystems 5 bestimmt oder ergänzt werden.

Zusätzlich oder alternativ können im Prozessschritt 33 von den Steuereinheiten 22, 23 des Traktors 1 und des Anbaugerätes 2 Informationen empfangen werden, welche das Fahrerassistenzsystem 5 zur Bestimmung der Kombination des Gespanns 4 aus Traktor 1 und Anbaugerät 2 auswerten kann.

In der Datenbank 13 sind feldspezifische Datensätze 39 eines oder mehrerer Fahrerprofile 19 hinterlegt. Das zumindest eine Fahrerprofil 19 enthält Informationen zu Namen und Rufnummern einer Bedienperson, zu Terminaleinstellungen von Traktor 1 und/oder Anbaugerät 2, wie zum Beispiel Einheiten, Spracheinstellung und dergleichen, zu Komfort-Einstellungen, beispielsweise Funkkonfiguration, oder Einstellungen von Heizung, Lüftung und Klimatisierung in der Fahrerkabine des Traktors 1, zur Art der Benutzeridentifikation, zum Beispiel mittels Profil, iBeacon, Aufgabe oder dergleichen.

Weiter sind in der Datenbank 13 Datensätze 39 von Maschinendaten 34 zu einem oder mehreren Traktoren 1 hinterlegt. Die Maschinendaten 34 enthalten Informationen zum Fahrzeuggewicht, zu Fahrzeugabmessungen, zu Beschränkungen, zum Antriebsstrang, zu Anbauschnittstellen und dergleichen.

Die Datenbank 13 enthält Datensätze 39 zu Anbaugerätdaten 35 zu einem oder mehreren Anbaugeräten 2. Die Anbaugerätdaten 35 beinhalten Informationen zur Kategorie, zur Art oder zum Typ des Anbaugerätes, zu Geometrien, zum Gewicht, zur Konfiguration und/oder Ausstattung, zur Leistungsverteilung und dergleichen mehr.

Weiterhin sind in der Datenbank 13 Datensätze 39 zu Reifendaten 36 zu einem oder mehreren Reifen von Traktoren 1 hinterlegt. Die Reifendaten beinhalten Informationen zu Abmessungen, Tragfähigkeit bei verschiedenen Drücken und dergleichen.

Des Weiteren sind in der Datenbank 13 Datensätze 39 zu Bodendaten 37 zu einem oder mehreren Feldern 25, 26 oder Flächen 40 hinterlegt. Die Bodendaten 37 beinhalten Informationen zum Traktionsverhältnis, zum Rollwiderstand, zum bodenmatrischen Potential, zur Vorverdichtung des Bodens.

Ebenso enthält die Datenbank 13 Datensätze 39 zu Erntedaten 38 zu einem oder mehreren Feldern 25, 26 oder Flächen 40. Die Erntedaten 38 können bearbeitungsspezifische Informationen zu Einstellungen von Traktor 1 und/oder Anbaugerät 2 enthalten, beispielsweise Motordrückung, Schnitthöhe, Pressendruck von Ballenpressen als Anbaugeräten und dergleichen.

Allen vorstehend aufgeführten Datensätzen 39 ist gemeinsam, dass diese in der Datenbank 13 georeferenziert hinterlegt sind. Die Datensätze 39 sind individuellen Feldern 25, 26 zugeordnet. Die hinterlegten Datensätze 39 eines Feldes 25, 26 variieren dabei insbesondere in Abhängigkeit von Bedienperson, Traktor 1 und/oder Anbaugerät 2 sowie den damit verbundenen Maschinendaten 34, Anbaugerätedaten 35, Reifendaten 36, Bodendaten 37 und/oder Erntedaten 38.

Das Fahrerassistenzsystem 5 bestimmt beim erstmaligen Befahren des Feldes 25 den Datensatz 39 oder die Datensätze 39 des dem Feld 25 zugeordneten Fahrerprofils 19 und/oder der dem Feld 25 zugeordneten Maschineneinstellung 20 des Gespanns 4 aus den Maschinendaten 34, Anbaugerätedaten 35, Reifendaten 36, Bodendaten 37 und/oder Erntedaten 38, welche mit der im Prozessschritt 33 bestimmten Kombination des Gespanns 4 und den aus dem auf dem Feld 25 auszuführenden Arbeitsauftrag 32 ermittelten Informationen übereinstimmt.

Das Fahrerassistenzsystem 5 stellt den Traktor 1 und/oder das Anbaugerät 2 gemäß dem als Datensatz 39 geladenen Fahrerprofil 19 und/oder der als Datensatz 39 geladenen Maschineneinstellung 20 feldspezifisch ein, bevor die Bearbeitung des Feldes 25, 26 durch das Gespann 4 aufgenommen wird.

Dabei umfasst der Datensatz 39 mit Maschineneinstellungen 20 die automatische Ansteuerung von Steuereinheiten 22, 23 und/oder Aktuatoren von Traktor 1 und Anbaugerät 2 durch das Fahrerassistenzsystem 5, um diese optimal einzustellen, sowie Anweisungen für manuell von der Bedienperson auszuführende Einstellungen am Traktor und dem Anbaugerät 2.

Eine automatische Ansteuerung von Steuereinheit 22 und Aktuatoren des Traktors 1 umfasst das Bussystem 24, welches vorzugsweise ein ISO-Bussystem ist, die Steuerung, den Antriebsmotor, den Antriebsstrang, die Zapfwellendrehzahl, die Hydraulik, die Motordrückung, den Allradantrieb, die Differentialsperre, die Anhängevorrichtung, den Reifendruck mittels Reifendruckregelanlage.

Eine automatische Ansteuerung von Steuereinheit 23 und Aktuatoren des Anbaugerätes 2 umfasst das Bussystem 24, welches vorzugsweise ein ISO-Bussystem ist, die Teilbreitensteuerung (Section-Control), den Pressendruck, die Höheneinstellung von Erntegutaufnahmevorrichtungen.

Die möglichen Optionen der automatischen Ansteuerung variiert in Abhängigkeit von der Ausstattung, Art und Typ von Traktor 1 bzw. Anbaugerät 2.

Manuell auszuführende Einstellungen am Traktor 1 können die Ballastierung, die Einstellung der Anhängevorrichtung oder dergleichen sein.

Manuell auszuführende Einstellungen am Anbaugerät 2 können die einzustellende Arbeitstiefe oder Schnitthöhe, die Einstellung von Scharflügeln oder dergleichen sein.

Die möglichen Optionen der manuell vorzunehmenden Einstellungen variiert ebenfalls in Abhängigkeit von der Ausstattung, Art und Typ von Traktor 1 bzw. Anbaugerät 2.

Das Fahrerassistenzsystem 5 ist dazu ausgeführt und eingerichtet, während der Bearbeitung des Feldes 25, 26 oder der Fläche 40 Bodendaten 37, Erntedaten 38, Maschinendaten 34, die mittels der Sensoren 10, 11 erfasst werden, und/oder Änderungen des Fahrerprofils 19 georeferenziert aufzuzeichnen.

Das Fahrerassistenzsystem 5 überträgt die aufgezeichneten Bodendaten 37, Erntedaten 38, Maschinendaten 34 und/oder Änderungen des Fahrerprofils 19 an das entfernte Datenverarbeitungssystem 14 zur Auswertung und georeferenzierten Hinterlegung.

Weiterhin ist das Fahrerassistenzsystem 5 dazu ausgeführt und eingerichtet, das Verlassen des Feldes 25, 26 durch das Überschreiten der geolokalisierten Begrenzung 27 zu detektieren und in Abhängigkeit hiervon zumindest eine vom Fahrerassistenzsystem 5 auszulösende Aktion zu initiieren. Das Verlassen des Feldes 25, 26 wird durch das Passieren eines Ausfahrtpunktes 31 durch das Gespann 4 detektiert. Dabei können der Zufahrtpunkt 28 und der Ausfahrtpunkt 31 voneinander räumlich entfernt sein oder in einem Punkt räumlich zusammenfallen, wie beispielhaft an einer zu bearbeitenden Fläche 40 veranschaulicht.

Die zumindest eine auszulösende Aktion kann das Abspeichern von während der Bearbeitung des Feldes 25, 26 oder der Fläche 40 ausgeführten Änderungen der Maschineneinstellungen 20 von Traktor 1 und/oder Anbaugerät 2 und/oder des Fahrerprofils 19 in der Datenbank 13 umfassen.

Das Fahrerassistenzsystem 5 kann eine Benutzerschnittstelle zur manuellen Auswahl von nach dem Überschreiten der geolokalisierten Begrenzung 27 des Feldes 25, 26 oder der Fläche 40 vorgeschlagenen Maschineneinstellungen 20 und/oder Fahrerprofilen 19 durch eine Bedienperson aufweisen.

Hier und vorzugsweise kann das Fahrerassistenzsystem 5 zur automatischen, insbesondere interaktiven, Generierung von Handlungsempfehlungen zur Maschineneinstellung nach dem Überschreiten der geolokalisierten Begrenzung 27 des Feldes 25, 26 oder der Fläche 40 ausgeführt und eingerichtet sein. Das automatische Generieren von Handlungsempfehlungen durch das Fahrerassistenzsystem 5 ist in Situationen relevant, in welchen für den Traktor 1 und das Anbaugerät 2 in ihrer Kombination als Gespann 4, mit der das Feld 25, 26 oder die Fläche 40 bearbeitet werden sollen, kein gemeinsamer feldspezifischer Datensatz 39 für ein Fahrerprofil 19 und/oder eine Maschineneinstellung 20 verfügbar ist. Dies kann beispielsweise bei einer Neuanschaffung von Traktor 1 und/oder Anbaugerät 2 der Fall sein. Gleiches gilt für eine Neukombination von Bestandsmaschinen, welche bislang in der Neukombination nicht auf einem Feld 25, 26 im Einsatz waren.

Beispielsweise können für den Traktor 1 und das Anbaugerät 2 jeweils spezifische Maschineneinstellungen 20 aus der Datenbank 13 geladen werden, die für das Feld 25, 26 oder die Fläche 40 zu einem vorangehenden Zeitpunkt einer Bearbeitung durch den Traktor 1 oder das Anbaugerät 2 hinterlegt worden sind. Analog kann dies für das Fahrerprofil 19 gelten.

So kann das Fahrerassistenzsystem 5 dazu ausgeführt und eingerichtet sein, bei einem erstmaligen Detektieren des Befahrens des Feldes 25, 26 oder der Fläche 40 zum Bearbeiten durch ein Gespann 4, dessen Kombination aus Traktor 1 und Anbaugerät 2 in der zumindest einen Datenbank 13 keine entsprechende, insbesondere feldspezifische, Hinterlegung von Maschineneinstellungen 20 aufweist, mittels in der zumindest einen Datenbank 13 und/oder in den Steuereinheiten 22, 23 des Traktors 1 und des Anbaugerätes 2 hinterlegten initialen Maschineneinstellungen einzustellen, die für in der zumindest einen Datenbank 13 hinterlegte historische Bodendaten 37 und/oder Erntedaten 38 des zu bearbeitenden Feldes 25, 26 oder der Fläche 40 spezifisch sind.

Ein weiterer Aspekt besteht im zeitlichen Abgleich zwischen der Detektion des erstmaligen Befahrens des Feldes 25, 26 und dem Zeitpunkt der Hinterlegung, auch durch Aktualisierung, eines oder mehrerer feldspezifischer Datensätze 39, die dem betreffenden Gespann 4 zugeordnet sind. Dabei kann das Laden des dem Feld 25, 26 oder der Fläche 40 zugeordneten Fahrerprofils 19 und/oder der zugeordneten Maschineneinstellung 20 beim erstmaligen Befahren des Feldes 25, 26 oder der Fläche 40 aus der zumindest einen Datenbank 13 durch zeitabhängigen Abgleich des Abrufzeitpunktes, welcher dem Zeitpunkt des erstmaligen Befahrens durch das einzustellende Gespann 4 entspricht, mit dem Zeitpunkt der früheren Hinterlegung des dem dabei detektierten Feld 25, 26 oder der Fläche 40 zugeordneten Fahrerprofils 19 und/oder der zugeordneten Maschineneinstellung 20 des Gespanns 4 erfolgen.

### Bezugszeichenliste

| | | | |
|---|---|---|---|
| 1 | Traktor | 34 | Maschinendaten |
| 2 | Anbaugerät | 35 | Anbaugerätdaten |
| 3 | Positionssensor | 36 | Reifendaten |
| 4 | Gespann | 37 | Bodendaten |
| 5 | Fahrerassistenzsystem | 38 | Erntedaten |
| 6 | Benutzerschnittstelle | 39 | Datensatz |
| 7 | Recheneinheit | 40 | Fläche |
| 8 | Speichereinheit | | |
| 9 | Sensoranordnung | | |
| 10 | Sensor | | |
| 11 | Sensor | | |
| 12 | Kommunikationsmittel | | |
| 13 | Datenbank | | |
| 14 | Datenverarbeitungssystem | | |
| 15 | Speichereinheit | | |
| 16 | Recheneinheit | | |
| 17 | Benutzerschnittstelle | | |
| 18 | Hofstätte | | |
| 19 | Fahrerprofil | | |
| 20 | Maschineneinstellung | | |
| 21 | Positionsbestimmungssystem | | |
| 22 | Steuereinheit | | |
| 23 | Steuereinheit | | |
| 24 | Bussystem | | |
| 25 | Feld | | |
| 26 | Feld | | |
| 27 | Geolokalisierte Begrenzung | | |
| 28 | Zufahrtpunkt | | |
| 29 | Fahrstrecke | | |
| 30 | Fahrstrecke | | |
| 31 | Ausfahrtpunkt | | |
| 32 | Arbeitsauftrag | | |
| 33 | Prozessschritt | | |

## Patentansprüche

1. Fahrerassistenzsystem (5) zur Ansteuerung eines landwirtschaftlichen Gespanns (4), wobei das Gespann (4) einen Traktor (1) und ein landwirtschaftliches Anbaugerät (2) aufweist, wobei das Fahrerassistenzsystem (5) durch ein Kommunikationsmittel (12) mit zumindest einer Datenbank (13) verbunden ist, in welcher Maschineneinstellungen (20) zumindest einer Kombination aus Traktor (1) und Anbaugerät (2) hinterlegt sind, **dadurch gekennzeichnet, dass** das Fahrerassistenzsystem (5) dazu ausgeführt und eingerichtet ist, ein erstmaliges Befahren eines Feldes (25, 26) oder einer Fläche (40) zum Bearbeiten durch das Gespann (4) durch das Überschreiten einer geolokalisierten Begrenzung (27) des Feldes (25, 26) oder der Fläche (40) zu detektieren, einen Datensatz (39) eines dem Feld (25, 26) oder der Fläche (40) zugeordneten Fahrerprofils (19) und/oder einer zugeordneten Maschineneinstellung (20) des Gespanns (4) beim erstmaligen Befahren des Feldes (25, 26) oder der Fläche (40) aus der zumindest einen Datenbank (13) zu laden und den Traktor (1) und/oder das Anbaugerät (2) gemäß dem geladenen Fahrerprofil (19) und/oder der geladenen Maschineneinstellung (20) einzustellen.

2. Fahrerassistenzsystem (5) nach Anspruch 1, **dadurch gekennzeichnet, dass** das Fahrerassistenzsystem (5) dazu ausgeführt und eingerichtet ist, das Verlassen des Feldes (25, 26) oder der Fläche (40) durch das Überschreiten der geolokalisierten Begrenzung (27) zu detektieren und in Abhängigkeit hiervon zumindest eine vom Fahrerassistenzsystem (5) auszulösende Aktion zu initiieren.

3. Fahrerassistenzsystem (5) nach Anspruch 2, **dadurch gekennzeichnet, dass** die zumindest eine auszulösende Aktion das Abspeichern von während der Bearbeitung des Feldes (25, 26) oder der Fläche (40) ausgeführten Änderungen der Maschineneinstellungen (20) von Traktor (1) und/oder Anbaugerät (2) und/oder des Fahrerprofils (19) in der Datenbank (13) umfasst.

4. Fahrerassistenzsystem (5) nach einem der vorangehenden Ansprüche, **dadurch gekennzeichnet, dass** das Fahrerassistenzsystem (5) die Zusammenstellung des Gespanns (4) selbsttätig aus von einem entfernten Datenverarbeitungssystem (14) übermittelten Arbeitsauftrag (32) ableitet und/oder durch eine manuelle Auftragseingabe mittels einer Benutzerschnittstelle (6) des Fahrerassistenzsystems (5) bestimmt oder ergänzt.

5. Fahrerassistenzsystem (5) nach einem der vorangehenden Ansprüche, **dadurch gekennzeichnet, dass** das Fahrerassistenzsystem (5) dazu ausgeführt und eingerichtet ist, mittels zumindest eines Bussystems (24) mit Steuereinheiten (22, 23) des Traktors (1) und des Anbaugerätes (2) unabhängig voneinander bidirektional zu kommunizieren.

6. Fahrerassistenzsystem (5) nach einem der vorangehenden Ansprüche, **dadurch gekennzeichnet, dass** das Fahrerassistenzsystem (5) zur manuellen Auswahl von nach dem Überschreiten der geolokalisierten Begrenzung (27) des Feldes (25, 26) oder der Fläche (40) vorgeschlagenen Maschineneinstellungen (20) und/oder Fahrerprofilen (19) durch eine Bedienperson ausgeführt und eingerichtet ist.

7. Fahrerassistenzsystem (5) nach einem der vorangehenden Ansprüche, **dadurch gekennzeichnet, dass** das Fahrerassistenzsystem (5) zur automatischen, insbesondere interaktiven, Generierung von Handlungsempfehlungen zur Maschineneinstellung nach dem Überschreiten der geolokalisierten Begrenzung (27) des Feldes (25, 26) oder der Fläche (40) ausgeführt und eingerichtet ist.

8. Fahrerassistenzsystem (5) nach einem der vorangehenden Ansprüche, **dadurch gekennzeichnet, dass** das Fahrerassistenzsystem (5) dazu ausgeführt und eingerichtet ist, während der Bearbeitung des Feldes (25, 26) oder der Fläche (40) Bodendaten (37) Erntedaten (38), Maschinendaten (34). Anbaugerätedaten (35), Reifendaten (36) und/oder Änderungen des Fahrerprofils (19) georeferenziert aufzuzeichnen.

9. Fahrerassistenzsystem (5) nach Anspruch 8, **dadurch gekennzeichnet, dass** das Fahrerassistenzsystem (5) dazu ausgeführt und eingerichtet ist, die aufgezeichneten Bodendaten (37), Erntedaten (38), Maschinendaten (34), Anbaugerätedaten (35), Reifendaten (36) und/oder Änderungen des Fahrerprofils (19) an das entfernte Datenverarbeitungssystem (14) zur Auswertung und/oder Hinterlegung zu übertragen.

10. Fahrerassistenzsystem (5) nach einem der vorangehenden Ansprüche, **dadurch gekennzeichnet, dass** das Fahrerassistenzsystem (5) dazu ausgeführt und eingerichtet ist, bei einem erstmaligen Detektieren des Befahrens des Feldes (25, 26) oder der Fläche (40) zum Bearbeiten durch ein Gespann (4), dessen Kombination aus Traktor (1) und Anbaugerät (2) in der zumindest einen Datenbank (13) keine entsprechende Hinterlegung von Maschineneinstellungen (20) aufweist, mittels in der zumindest einen Datenbank (13) und/oder in Steuereinheiten (22, 23) des Traktors (1) und des Anbaugerätes (2) hinterlegten initialen Maschineneinstellungen einzustellen, die für in der zumindest einen Datenbank (13) hinterlegte historische Bodendaten (37) und/oder Erntedaten (38) des zu bearbeitenden Feldes (25, 26) oder der Fläche (40) spezifisch sind.

11. Fahrerassistenzsystem (5) nach einem der vorangehenden Ansprüche, **dadurch gekennzeichnet, dass** das Fahrerassistenzsystem (5) Positionsdaten von zumindest einem dem Gespann (4) zugeordneten Positionssensor (3) empfängt, wobei der zumindest eine Positionssensor (3) am Traktor (1) und/oder am Anbaugerät (2) angeordnet ist und/oder ein von einer Bedienperson des Gespanns (4) mitgeführter Positionssensor ist.

12. Fahrerassistenzsystem (5) nach einem der vorangehenden Ansprüche, **dadurch gekennzeichnet, dass** das Laden des dem Feld (25, 26) oder der Fläche (40) zugeordneten Fahrerprofils (19) und/oder der zugeordneten Maschineneinstellung (20) beim erstmaligen Befahren des Feldes (25, 26) oder der Fläche (40) aus der zumindest einen Datenbank (13) durch zeitabhängigen Abgleich des Abrufzeitpunktes mit dem Zeitpunkt der Hinterlegung des dem detektierten Feld (25, 26) oder der Fläche (40) zugeordneten Fahrerprofils (19) und/oder der zugeordneten Maschineneinstellung (20) des Gespanns (4) erfolgt.

13. Fahrerassistenzsystem (5) nach einem der vorangehenden Ansprüche, **dadurch gekennzeichnet, dass** die zumindest eine Datenbank (13) in einer gespannfernen Datenquelle hinterlegt ist, wobei die gespannferne Datenquelle eine gespannferne Datenverarbeitungshardware, insbesondere ein Cloud-basiertes Datenverarbeitungssystem, ist.

14. Gespann (4), welches einen Traktor (1) und ein landwirtschaftliches Anbaugerät (2) aufweist, wobei dem Gespann (4) ein Fahrerassistenzsystem (5) zugeordnet ist, **dadurch gekennzeichnet, dass** das Fahrerassistenzsystem (5) nach einem der Ansprüche 1 bis 13 ausgeführt ist.

15. Verfahren zum Betrieb eines Gespanns (4), welches einen Traktor (1) und ein landwirtschaftliches Anbaugerät (2) aufweist, wobei das Gespann (4) von einem diesem zugeordneten Fahrerassistenzsystem (4), insbesondere einem Fahrerassistenzsystem (5) nach einem der Ansprüche 1 bis 13, angesteuert wird, wobei das Fahrerassistenzsystem (5) durch ein Kommunikationsmittel (12) mit zumindest einer Datenbank (13) verbunden ist, in welcher Maschineneinstellungen (20) zumindest einer Kombination aus Traktor (1) und Anbaugerät (2) hinterlegt sind, **dadurch gekennzeichnet, dass** das Fahrerassistenzsystem (5) ein erstmaliges Befahren eines Feldes (25, 26) oder einer Fläche (40) zum Bearbeiten durch das Gespann (4) durch das Überschreiten einer geolokalisierten Begrenzung (27) des Feldes (25, 26) oder der Fläche (40) detektiert wird, ein dem Feld (25, 26) oder der Fläche (40) zugeordnetes Fahrerprofil (19) und/oder eine zugeordnete Maschineneinstellung (20) beim erstmaligen Befahren des Feldes (25, 26) oder der Fläche (40) aus der zumindest einen Datenbank (13) lädt und den Traktor (1) und/oder das Anbaugerät (2) gemäß dem geladenen Fahrerprofil (19) und/oder der geladenen Maschineneinstellung (20) einstellt.

## Claims

1. Driver assistance system (5) for controlling an agricultural tractor/trailer pairing (4), the tractor/trailer pairing (4) comprising a tractor (1) and an agricultural attachment (2), the driver assistance system (5) being connected to at least one database (13), in which machine settings (20) relating to at least one combination of tractor (1) and attachment (2) are stored, by a communication means (12), **characterized in that** the driver assistance system (5) is designed and configured to detect that a field (25, 26) or area (40) to be worked on is being accessed for the first time by the tractor/trailer pairing (4) as a result of a geolocated boundary (27) of the field (25, 26) or area (40) being crossed, to load a data set (39) relating to a driver profile (19) associated with the field (25, 26) or area (40) and/or to an associated machine setting (20) relating to the tractor/trailer pairing (4) from the at least one database (13) when the field (25, 26) or area (40) is being accessed for the first time, and to adjust the tractor (1) and/or the attachment (2) according to the loaded driver profile (19) and/or the loaded machine setting (20).

2. Driver assistance system (5) according to Claim 1, **characterized in that** the driver assistance system (5) is designed and configured to detect that the field (25, 26) or area (40) is being exited as a result of the geolocated boundary (27) being crossed and to take this as a basis for initiating at least one action to be triggered by the driver assistance system (5).

3. Driver assistance system (5) according to Claim 2, **characterized in that** the at least one action to be triggered comprises storing changes made to the machine settings (20) of the tractor (1) and/or the attachment (2) and/or to the driver profile (19) while the field (25, 26) or area (40) is being worked on in the database (13).

4. Driver assistance system (5) according to one of the preceding claims, **characterized in that** the driver assistance system (5) automatically derives the composition of the tractor/trailer pairing (4) from a work order (32) transmitted by a remote data processing system (14) and/or determines or adds to said composition by way of manual order input by means of a user interface (6) of the driver assistance system (5).

5. Driver assistance system (5) according to one of the preceding claims, **characterized in that** the driver assistance system (5) is designed and configured to use at least one bus system (24) to communicate bidirectionally with control units (22, 23) of the tractor (1) and the attachment (2) independently of one another.

6. Driver assistance system (5) according to one of the preceding claims, **characterized in that** the driver assistance system (5) is designed and configured for manual selection of machine settings (20) and/or driver profiles (19) proposed after the geolocated boundary (27) of the field (25, 26) or area (40) has been crossed, by an operator.

7. Driver assistance system (5) according to one of the preceding claims, **characterized in that** the driver assistance system (5) is designed and configured for automatic, in particular interactive, generation of recommended actions for machine adjustment after the geolocated boundary (27) of the field (25, 26) or area (40) has been crossed.

8. Driver assistance system (5) according to one of the preceding claims, **characterized in that** the driver assistance system (5) is designed and configured to record soil data (37) harvest data (38), machine data (34), attachment data (35), tyre data (36) and/or changes to the driver profile (19) in a georeferenced manner while the field (25, 26) or area (40) is being worked on.

9. Driver assistance system (5) according to Claim 8, **characterized in that** the driver assistance system (5) is designed and configured to transfer the recorded soil data (37), harvest data (38), machine data (34), attachment data (35), tyre data (36) and/or changes to the driver profile (19) to the remote data processing system (14) for evaluation and/or storage.

10. Driver assistance system (5) according to one of the preceding claims, **characterized in that** the driver assistance system (5) is designed and configured so as, when detecting for the first time that the field (25, 26) or area (40) to be worked on is being accessed by a tractor/trailer pairing (4) whose combination of tractor (1) and attachment (2) has no corresponding storage of machine settings (20) in the at least one database (13), to adjust by means of initial machine settings, stored in the at least one database (13) and/or in control units (22, 23) of the tractor (1) and the attachment (2), that are specific to historical soil data (37) and/or harvest data (38) relating to the field (25, 26) or area (40) to be worked on that are stored in the at least one database (13).

11. Driver assistance system (5) according to one of the preceding claims, **characterized in that** the driver assistance system (5) receives position data from at least one position sensor (3) associated with the tractor/trailer pairing (4), the at least one position sensor (3) being arranged on the tractor (1) and/or on the attachment (2) and/or being a position sensor carried by an operator of the tractor/trailer pairing (4).

12. Driver assistance system (5) according to one of the preceding claims, **characterized in that** the driver profile (19) associated with the field (25, 26) or area (40) and/or the associated machine setting (20) are/is loaded from the at least one database (13), when the field (25, 26) or area (40) is being accessed for the first time, by way of time-dependent comparison of the retrieval time with the time of storage of the driver profile (19) associated with the detected field (25, 26) or area (40) and/or the associated machine setting (20) relating to the tractor/trailer pairing (4).

13. Driver assistance system (5) according to one of the preceding claims, **characterized in that** the at least one database (13) is stored in a data source remote from the tractor/trailer pairing, the data source remote from the tractor/trailer pairing being data processing hardware remote from the tractor/trailer pairing, in particular a cloud-based data processing system.

14. Tractor/trailer pairing (4) comprising a tractor (1) and an agricultural attachment (2), the tractor/trailer pairing (4) having an associated driver assistance system (5), **characterized in that** the driver assistance system (5) is designed according to one of Claims 1 to 13.

15. Method for operating a tractor/trailer pairing (4) comprising a tractor (1) and an agricultural attachment (2), wherein the tractor/trailer pairing (4) is controlled by a driver assistance system (4) associated therewith, in particular a driver assistance system (5) according to one of Claims 1 to 13, the driver assistance system (5) being connected to at least one database (13), in which machine settings (20) relating to at least one combination of the tractor (1) and the attachment (2) are stored, by a communication means (12), **characterized in that** the driver assistance system (5) detects that a field (25, 26) or an area (40) to be worked on is being accessed for the first time by the tractor/trailer combination (4) as a result of a geolocated boundary (27) of the field (25, 26) or area (40) being crossed, loads a driver profile (19) associated with the field (25, 26) or area (40) and/or an associated machine setting (20) from the at least one database (13) when the field (25, 26) or area (40) is being accessed for the first time, and adjusts the tractor (1) and/or the attachment (2) according to the loaded driver profile (19) and/or the loaded machine setting (20).

## Revendications

1. Système d'assistance au conducteur (5) destiné à commander un attelage (4) agricole, ledit attelage (4) comportant un tracteur (1) et un outil attelé (2) agricole, le système d'assistance au conducteur (5) étant relié par un moyen de communication (12) à au moins une base de données (13) dans laquelle sont enregistrés des réglages de machine (20) d'au moins une combinaison d'un tracteur (1) et d'un outil attelé (2), **caractérisé en ce que** le système d'assistance au conducteur (5) est conçu et configuré pour détecter un premier passage dans un champ (25, 26) ou une surface (40) à travailler par l'attelage (4), du fait du franchissement d'une délimitation géolocalisée (27) du champ (25, 26) ou de la surface (40), pour charger un ensemble de données (39) d'un profil de conducteur (19) associé au champ (25, 26) ou à la surface (40) et/ou d'un réglage de machine (20) associé de l'attelage (4) lors du premier passage dans le champ (25, 26) ou la surface (40), à partir de la base de données (13), au nombre d'au moins une, et pour régler le tracteur (1) et/ou l'outil attelé (2) conformément au profil de conducteur (19) chargé et/ou du réglage de machine (20) chargé.

2. Système d'assistance au conducteur (5) selon la revendication 1, **caractérisé en ce que** le système d'assistance au conducteur (5) est conçu et configuré pour détecter la sortie du champ (25, 26) ou de la surface (40), du fait du franchissement de la délimitation géolocalisée (27), et pour lancer en fonction de cela au moins une action devant être déclenchée par le système d'assistance au conducteur (5).

3. Système d'assistance au conducteur (5) selon la revendication 2, **caractérisé en ce que** l'action à déclencher, au nombre d'au moins une, comprend l'enregistrement dans la base de données (13), de modifications, effectuées pendant le travail du champ (25, 26) ou de la surface (40), des réglages de machine (20) du tracteur (1) et/ou de l'outil attelé (2) et/ou du profil de conducteur (19).

4. Système d'assistance au conducteur (5) selon une des revendications précédentes, **caractérisé en ce que** le système d'assistance au conducteur (5) déduit automatiquement la combinaison de l'attelage (4) à partir d'une instruction de travail (32) transmise depuis un système de traitement de données (14) situé à distance, et/ou la détermine ou la complète du fait d'une saisie d'instruction manuelle à l'aide d'une interface utilisateur (6) du système d'assistance au conducteur (5).

5. Système d'assistance au conducteur (5) selon une des revendications précédentes, **caractérisé en ce que** le système d'assistance au conducteur (5) est conçu et configuré pour communiquer de manière bidirectionnelle à l'aide d'au moins un système de bus (24) avec des unités de commande (22, 23) du tracteur (1) et de l'outil attelé (2), indépendamment l'un de l'autre.

6. Système d'assistance au conducteur (5) selon une des revendications précédentes, **caractérisé en ce que** le système d'assistance au conducteur (5) est conçu et configuré pour la sélection manuelle, par un opérateur, de réglages de machine (20) et/ou de profils de conducteur (19) proposés après le franchissement de la délimitation géolocalisée (27) du champ (25, 26) ou de la surface (40).

7. Système d'assistance au conducteur (5) selon une des revendications précédentes, **caractérisé en ce que** le système d'assistance au conducteur (5) est conçu et configuré pour la génération automatique, notamment interactive, de recommandations d'actions pour le réglage de machine après le franchissement de la délimitation géolocalisée (27) du champ (25, 26) ou de la surface (40).

8. Système d'assistance au conducteur (5) selon une des revendications précédentes, **caractérisé en ce que** le système d'assistance au conducteur (5) est conçu et configuré pour enregistrer de manière géoréférencée, pendant le travail du champ (25, 26) ou de la surface (40), des données de sol (37), des données de récolte (38), des données de machine (34), des données d'outil attelé (35), des données de pneumatiques (36) et/ou des modifications du profil de conducteur (19).

9. Système d'assistance au conducteur (5) selon la revendication 8, **caractérisé en ce que** le système d'assistance au conducteur (5) est conçu et configuré pour transmettre les données de sol (37), les données de récolte (38), les données de machine (34), les données d'outil attelé (35), les données de pneumatiques (36) et/ou les modifications du profil de conducteur (19) enregistrées au système de traitement de données (14) situé à distance, en vue de l'évaluation et/ou de l'enregistrement.

10. Système d'assistance au conducteur (5) selon une des revendications précédentes, **caractérisé en ce que** le système d'assistance au conducteur (5) est conçu et configuré pour procéder à des réglages lors d'une première détection du passage dans le champ (25, 26) ou la surface (40) à travailler par un attelage (4) dont la combinaison du tracteur (1) et de l'outil attelé (2) ne présente pas d'enregistrement correspondant de réglages de machine (20) dans la base de données (13), au nombre d'au moins une, à l'aide de réglages de machine initiaux enregistrés dans la base de données (13), au nombre d'au moins une, et/ou dans des unités de commande (22, 23) du tracteur (1) et de l'outil attelé (2), lesquels réglages sont spécifiques à des données de sol (37) et/ou des données de récolte (38) historiques du champ (25, 26) ou de la surface (40) à travailler.

11. Système d'assistance au conducteur (5) selon une des revendications précédentes, **caractérisé en ce que** le système d'assistance au conducteur (5) reçoit des données de position d'au moins un capteur de position (3) associé à l'attelage (4), le capteur de position (3), au nombre d'au moins un, étant disposé sur le tracteur (1) et/ou sur l'outil attelé (2) et/ou étant un capteur de position porté par un opérateur de l'attelage (4).

12. Système d'assistance au conducteur (5) selon une des revendications précédentes, **caractérisé en ce que** le chargement du profil de conducteur (19) associé au champ (25, 26) ou à la surface (40) et/ou du réglage de machine (20) associé, lors du premier passage dans le champ (25, 26) ou la surface (40), s'effectue à partir de la base de données (13), au nombre d'au moins une, par comparaison, en fonction du temps, de l'instant de consultation avec l'instant d'enregistrement du profil de conducteur (19) associé au champ (25, 26) détecté ou à la surface (40) et/ou du réglage de machine (20) associé de l'attelage (4).

13. Système d'assistance au conducteur (5) selon une des revendications précédentes, **caractérisé en ce que** la base de données (13), au nombre d'au moins une, est stockée dans une source de données située à distance de l'attelage, ladite source de donnée située à distance de l'attelage étant un matériel de traitement de données situé à distance de l'attelage, en particulier un système de traitement de données basé sur le nuage.

14. Attelage (4) qui comporte un tracteur (1) et un outil attelé (2) agricole, un système d'assistance au conducteur (5) étant associé à l'attelage (4), **caractérisé en ce que** le système d'assistance au conducteur (5) est réalisé selon une des revendications 1 à 13.

15. Procédé de fonctionnement d'un attelage (4) qui comporte un tracteur (1) et un outil attelé (2) agricole, l'attelage (4) étant commandé par un système d'assistance au conducteur (5) qui lui est associé, en particulier un système d'assistance au conducteur (5) selon une des revendications 1 à 13, ledit système d'assistance au conducteur (5) étant relié par un moyen de communication (12) à au moins une base de données (13) dans laquelle sont enregistrés des réglages de machine (20) d'au moins une combinaison du tracteur (1) et de l'outil attelé (2), **caractérisé en ce que** le système d'assistance au conducteur (5) détecte un premier passage dans un champ (25, 26) ou une surface (40) à travailler par l'attelage (4), du fait du franchissement d'une délimitation géolocalisée (27) du champ (25, 26) ou de la surface (40), charge un profil de conducteur (19) associé au champ (25, 26) ou à la surface (40) et/ou un réglage de machine (20) associé lors du premier passage dans le champ (25, 26) ou la surface (40), à partir de la base de données (13), au nombre d'au moins une, et règle le tracteur (1) et/ou l'outil attelé (2) en fonction du profil de conducteur (19) chargé et/ou du réglage de machine (20) chargé.
